(19) Europäisches Patentamt
European Patent Office
Office européen des brevets

(11) **EP 4 782 780 A1**

(12) **EUROPEAN PATENT APPLICATION**

(43) Date of publication:
**29.07.2026 Bulletin 2026/31**

(21) Application number: **25153872.4**

(22) Date of filing: **24.01.2025**

(51) International Patent Classification (IPC):
**F28D 20/00** (2006.01)     **F24D 18/00** (2022.01)

(52) Cooperative Patent Classification (CPC):
**F28D 20/0056; F24D 18/00;** F24H 1/22;
F28F 2270/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Intergeo SK, s.r.o.**
**972 01 Bojnice (SK)**

(72) Inventors:
• **Bartko, Michal**
  **972 01 Bojnice (SK)**
• **Kiss, Gabriel**
  **971 01 Prievidza (SK)**

(74) Representative: **Majlingová, Zuzana**
  **Majlingová & Partners, s.r.o.**
  **Budatínska 12**
  **851 06 Bratislava (SK)**

(54) **ENERGY DEVICE FOR THE PRODUCTION, STORAGE AND SUPPLY OF HEAT AND METHOD OF PRODUCTION, STORAGE AND SUPPLY OF HEAT BY SAID DEVICE**

(57) This invention relates to the power device for the autonomous production, storage and supply for using the heat and cold, wherein this device comprises the core for heat storage; the heating system for the core heating; the circulation hydraulic system comprising the heat-bearing medium for the transfer of the heat from the core for heating, and the water system for the preparation of the hot water and production of the cold; the regulation system for the regulation of the core temperature and the heat-bearing medium flow; measuring system for the measuring of the core temperature and the heat-bearing medium flow; wherein this device comprises the core comprising heat-absorption filling having the grit of ≤ 0.1 mm, at least 0.025 mm, while the heat-absorption filling is adapted for permanent heat storage up to 350 °C; the heating system is adapted for heating of the heat-absorption filling to 350 °C; the regulation system comprises the control unit adapted for the control of the heating system and for the regulation of the heat-bearing medium flow; and wherein the part of the circulation system passes through the core and said part comprises the circulation element for the circulation of the heat-bearing medium, wherein the circulation element preferably represents the transport of the medium through the threat transport system placed in the core.

Fig. 3a

EP 4 782 780 A1

**Description**

**Technical Field**

The invention relates to the production, storage and supply of heat and cold, as well as the heating and cooling systems for family houses, municipal area buildings, residential and non-residential buildings. In more detail the invention relates to cost-saving heat-line heating and preparation of hot service water, or cold water.

**Background Art**

Present systems for production of heat, hot service water or cold, operated on the basis of central heat network, mains operated, or produced from gas, electricity, or by using of the alternative resources of heat and cold energy, which systems store the produced heat in the water volume, are limited by water temperature up to 70 °C, or rather maximally of 90 °C. Similar low-temperature systems up to 70-90 °C usually comprise a boiler for gas, solid or liquid fuels, eventually thermal pumps. These systems are not able to store heat energy at higher temperatures. Also at outage of the energy source they are not able fully work and provide for the central heating (CH), and hot service water (HSW), or rather cold for longer period.

The aim of this technical solution is the providing of the variable, ecologic, and cost-saving power devices for production, storage, and supply of the heat/cold, which are able to exert their function for relatively long time at the outage; at least 12 hours.

**Summary of the Invention**

The first aspect according to the present invention represents a power device for heat production, storage, and supply, which the device comprises:

- a core for heat storage equipped with a heat and reflective insulation, where the core comprises a heat-absorption filling in the form of the particles having the size of $\leq 0.1$ mm, preferably of 0.025 to 0.1 mm, with thermal conductivity at the operation temperature in the range of 1.65 - 5.6 W/m.K, and specific thermal capacity at the operating temperature in the range of 0.67 - 0.88 KJ/kg.K, where the operation temperature of the core is from 310 °C to 350 °C,
- an electric heating system adapted for the heating and maintaining of the heat-absorption filling at the constant temperature in the range of 310 °C to 350 °C, comprising at least one heating body,
- a common primary (hot) hydraulic circuit for heat double-exchanger system in the form of closed loop passing through the core and serving for conducting the heat away the core to the heat double-exchanger, wherein the primary hydraulic circuit comprises a primary heat-bearing medium,
- a first secondary (cold) circuit of the double-exchanger for hot service water, wherein the first secondary circuit comprises a first secondary heat-bearing medium, and wherein the first secondary circuit is adapted for removing the heat from the common primary hydraulic circuit,
- a second secondary (cold) circuit of the double-exchanger for heating, wherein the second secondary circuit comprises a second secondary heat-bearing medium, and wherein the second secondary circuit is adapted for removing the heat from the common primary hydraulic circuit,
- a circulation element in the form of scroll for providing of the flow of the primary heat-bearing medium, where the scroll is positioned in the primary hydraulic circuit in the core,
- an electric motor with a frequency converter for driving and controlling of the circulation element revolutions for providing of the volumetric flow and the pressure of the primary heat-bearing medium,
- a measuring system comprising at least one instrument measuring the temperature in the core, at least one instrument measuring the temperature of the primary heat-bearing medium at core outlet and at least one instrument measuring the temperature of the primary heat-bearing medium at core inlet, at least one instrument measuring the temperature of the first secondary heat-bearing medium at the double-exchanger inlet, at least one instrument measuring the temperature of the first secondary heat-bearing medium at the double-exchanger outlet, at least one instrument measuring the temperature the second secondary heat-bearing medium at the double-exchanger inlet, at least one instrument measuring the temperature the second secondary heat-bearing medium at the double-exchanger outlet, at least one instrument measuring the volumetric flow of the primary heat-bearing medium, at least one instrument measuring the volumetric flow rate of the first secondary heat-bearing medium, at least one instrument measuring the volumetric flow rate of the second secondary heat-bearing medium and at least one instrument measuring the circulation element revolutions, and
- a control unit for control and regulation of the electric heating system, the primary hydraulic circuit, and the first and second secondary circuits of the double-exchanger.

Wherein the heat conductivity defines the amount of the heat flow passing through the unit volume of material at the temperature gradient of 1 °C. The equation for the calculation of the thermal output passing through the material having the thermal conductivity $\lambda$ [Wm-1K-1], area S [m$^2$], width d [m], at the temperature gradient of $\Delta T$ [°C] is represented by the formula P = $\lambda$S/d$\Delta T$. Measuring of the thermal conductivity is based on the above formula, and it is carried out by the measurement of the temperature gradient in the sample during the transfer of the known output; alternatively, by the measurement of the output needed for the maintenance of the constant sample temperature. "Hot plate" or "guarded hot plate" methods can be used for the measurement of the thermal conductivity. Also the "hot wire" method can be used for the measurement of the thermal conductivity, wherein the temperature gradient is measured in the defined distance from the thermal source.

And wherein the specific (mass) thermal capacity is the amount of heat needed to be supply or remove from 1 kg of a substance, in order to change its temperature by 1 K, and is defined by the equation: c =1/m . $\Delta Q/\Delta T$, where m is the body weight, $\Delta Q$ is the added heat, and $\Delta T$ is the change of temperature. For measurement of the specific thermal capacity it is possible to use the calorimetric method - e.g. the mixing calorimeter.

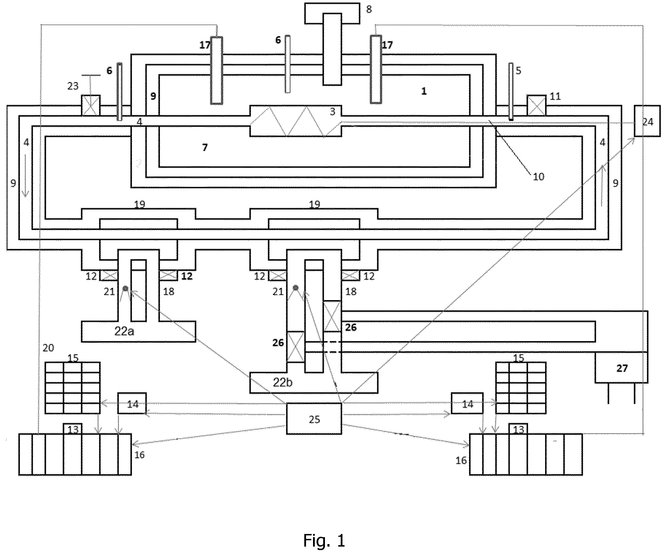

Wherein the double-exchanger comprises two heat exchangers (for HSW and for CH/E) hydraulically connected in series in the primary hydraulic circuit, where each exchanger is equipped with the parallel bypass branch of the primary hydraulic circuit via the three-way valves, in order to enable shutdown of the individual exchanger without the shutdown of the complete device (fig. 1, 3a, 3b, and 5).

Suitable instruments measuring the volumetric flow rate can be the ultrasonic flowmeters. The instruments measuring temperature can be e.g. monitoring thermometers, bimetallic thermometers, or thermometers with the automatic shut-down upon increasing to the specific temperature. Instruments measuring the revolutions can be magnetic or stroboscopic measuring instruments, or other measuring instruments enabling continual measurements of the revolutions in the regime from zero to maximal electric motor revolutions, continually via the frequency converter.

The electric heating system can be the electric resistance heating system with direct current or alternating current. Preferably, it can comprises from two to eight heating bodies, alternatively more heating bodies. Preferably, the heating bodies are positioned evenly in the core volume, in order to ensure overlapping of the thermal coverage of the heating bodies and uniform heating of the heat-absorption filling. Preferably, the heating bodies are electric coil. Each electric coil is preferably positioned in the protective air-proof and leak-proof case (so called sump), which case separate the electric coil from the direct contact with the heat-absorption filling. The electric coils can be positioned on the ceramic spikes to prevent the contact between the coil and the inner part of the case. Using of the protective cases prevents the corrosion of the heating bodies. In the same time it prevents the impact on the surrounding environment, because the heating bodies are in fact closed in the space without air access.

The electric heating system heats the heat-absorption filling to the working temperature and continually (permanently) maintains it at this temperature. Thus, it also prevents the tensions of the core materials. The working temperature is in the range from 310 °C to 350 °C. The control unit receives by the means of the measuring system information relating to the core temperature, and by the means of the electric heating system it keeps the heat-absorption filling at the working temperature.

According to the preferred embodiment the source of the electric power of the heating system is an electricity network, and eventually a battery storage. The selection of the power source is controlled by the control unit.

The battery storage is primarily powered and recharged from the electricity network (e.g. at reduced tariff). The battery storage can be recharged and maintained at the desired parameters also from other alternative electric energy resources, such as photovoltaic panels, wind turbines, flow turbines. Small flow turbines can be positioned upstream or downstream the mixing valves of the central heating and hot service water in the premises. Always, when water starts to flow in the first or second secondary circuits, the small flow turbines are activated automatically and recharge the battery storage. The selection of the source for recharging of the battery storage is controlled by the control unit of the battery storage by automatically controlling the current draw from the various sources available.

The core can be of various shapes, e.g. cylinder, cube or cuboid, or of other atypical shape, if it is necessary to reflect the possibilities of its positioning in the space. The volume of the core may range from the smallest volumes on the order of 0.10 m$^3$ to the largest volumes on the order of several m$^3$ to dozens of m$^3$.

Preferably the core is of cylindrical shape enabling variation of the core volume size by changing the diameter or length of the core. Variation of the core size enables, when it is needed or required, adopting of the energetic system for the specific solution with a predetermined heat consumption (premises - facility/house/flat/building). Bigger cores should be positioned on more stabilization elements.

Core volume size depends on the specific solution of the power device depending on annual heat consumption of the given premises in MWh, and the required period of the emergency operation in case of failure of the power network resource.

The heat-absorption filling can be a powdered natural material based on basalt, magnesite, halite (grounded rock salt), talk, whinstone, flake graphite, or their combination, preferable 70 weight % of talk and 30 weight % of flake graphite. High heat accumulation capacity and the thermal conductivity are the characteristics of the heat-absorption filling.

The advantage of the heat-absorption filling having said particle size is that it can be simply poured in the core or possibly replaced. The filling can be filled into or removed from the core via the openings in the core, at its upper and lower parts, where the openings are equipped with the stoppers. In the same time, the particle size of ≤ 0.1 mm or in the range of 0.025 mm to 0.1 mm, ensures increased efficiency of thermal conductivity of the filling without the negative impacts of the air gaps.

The primary heat-bearing medium can preferably be thermal oil, glycerin or liquid tin, preferably the thermal oil. The thermal oil can be a medium based on the mineral oil, preferably MOL Thermol 68. The primary heat-bearing medium has high thermal conductivity of the liquid phase and low viscosity at the temperature of 350 °C. The advantage of using such a primary heat-bearing medium is the elimination of the hydraulic resistances in the common primary hydraulic circuit.

The first and the second secondary heat-bearing mediums can be identical or different and can be water or glycerin.

The second secondary circuit of the double-exchanger for heating is adapted for connection to both the heating circuit, and the cooling circuit, i.e. also to an ejector (E) for production of the cold from the heat (see Fig. 1).

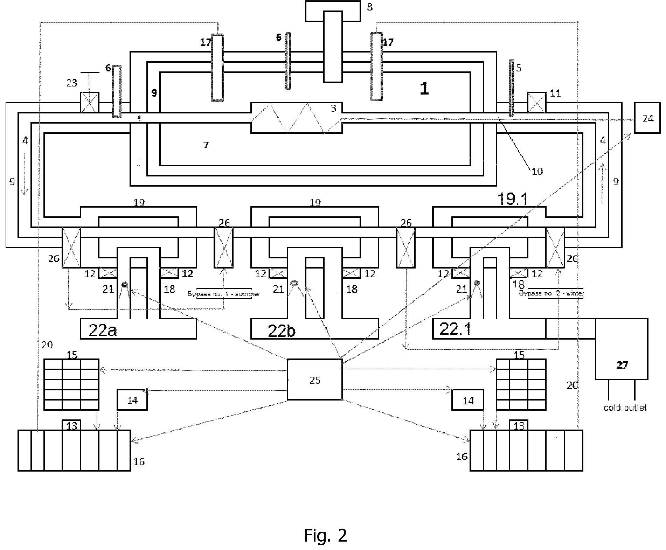

The power device according to the present invention can comprise also the third heat exchanger comprising the secondary circulation system (circuit) for cooling, which circuit is connected to the ejector for the cold production (see Fig. 2).

The common primary hydraulic circuit passes through the core, where it heats the primary heat-bearing medium, which medium removes the heat from the core volume and transfers it to the corresponding first and second secondary circuits of the double-exchangers.

The common primary hydraulic circuit preferably passes along the longitudinal axis of the core, in order to by evenly surrounded by the heat-absorption filling and for the uniform heating of the primary heat-bearing medium. However, the arrangement of the common primary hydraulic circuit in the core can be arbitrary.

The scroll is positioned in the core in the primary hydraulic circuit. The scroll system is controlled/driven via the electric motor with the frequency converter, and ensures the flow (circulation) of the primary heat-bearing medium in the primary hydraulic circuit. The electric motors can be driven by direct current (DC) or by alternating current (AC).

According to the preferred embodiment the scroll extends along the total core length, or may even extend beyond it. According to another embodiment the scroll extends along only the part of the core length, preferably in its middle.

The common primary hydraulic circuit is preferably equipped with the safety three-way or four-way valves, connected by a parallel branch in the form of by-passes, before the core inlet and after the core outlet. Upon increasing of a temperature in the core above the predetermined temperature, the primary heat-bearing medium is automatically redirected via the valves through the parallel branch away from the double-exchangers.

The part of the primary hydraulic circuit, in which the circulation element (scroll) is placed, can be of bigger diameter as the rest of the primary hydraulic circuit, in order to ensure uniform flow of the primary heat-bearing medium. The bigger diameter provides for higher flow capacity of the primary heat-bearing medium through the scroll, and thus the lower rotation rate of the scroll is required.

From its outer side the core is embedded by a thermal and reflexive insulation for preventing the heat loss and heat leakage from the core to the surface of the device. The thermal insulation of the core should have the long-term high thermal resistance up to the temperature of 1,200 °C. In the same time, it should comprise the reflexive element, in order to prevent the leakage of the radiant heat from the core to the surrounding. The core embedded by the thermal insulation is preferably placed in the outer case (housing) ensuring water-resistance and air-tightness for the core. For example, the outer case can be a skeleton from ceramic refractory insulation, possibly a skeleton equipped also with alumina folia, or a stabilization case of the thermal insulation made using the assembled metal plates, where at the bottom side the double thermal insulation is placed on the transport pallet of the power device, which pallet also distribute the weight of the device on the floor, where the device is placed.

The primary hydraulic circuit located outside the core, as well as the first and the second secondary circuits of the double-exchanger are also equipped with the thermal insulation for minimization of the heat losses during the heat distribution. The thermal insulation can be the same as one for the core.

The control unit optimizes the energy consumption by suitable selection of the resource of the electric power for the heating system according to the economic benefits of the resource.

The control unit, based on information from the measuring system, also controls the electric motor with the frequency converter, which electric motor drives the scroll rotation and thus adjusts the volumetric flow of the primary heat-bearing medium in the primary hydraulic circuit.

The control unit, based on information from the measuring system, also controls the operation of the entire power device, in order to maintain the most economical operation of the device, and in order to make the device to work in the continuous balance equilibrium of heat production and heat consumption. The control unit can be preferably operated via mobile phone, computer, and tablet.

The second secondary circuit of the double-exchanger for heating (the central heating) can work in the two-stage regime, i.e. in the heating period it provides central heating, and in the summer period it provides cold production via the ejector. This second secondary circuit of the double-exchanger provides the ejector with hot water for the cold production, where the cold is transferred from the heat double-exchanger for the cold water to the radiator hot-water distribution of a given premises or to the of floor or ceiling heating system, and thus providing the function of air-conditioning, and in the same time the control unit determines the required water temperature on the basis of the data from the instruments measuring the temperature, in order to prevent the occurrence of dew points.

The first secondary circuit of the double-exchanger for hot service water usually operates in year-round regime.

The first and the second secondary circuits of the double-exchanger can be tubular, spiral or of another shape. They can be made from various materials, such as refractory sheets, stainless steel, copper, titanium, or tubular system, bellows, and the like, which materials are resistant against the temperatures up to 400 °C, and the low temperatures up to -70 °C.

Flow control in the first and second secondary circuit of the double-exchangers is carried out by circulation pumps, which are controlled by the control unit. Preferably, the own circulation pumps of the premises can be used as the circulation pumps, if the premises comprises them. These circulation pumps are interlocked through the control unit to the circulation pump of the primary hydraulic circuit (scroll - electric motor). The temperature is measured by the instruments measuring temperature, and the flow is measured by the instruments measuring the flow. The safe operation in the double-exchangers is ensured by the safety valves, preferably by two at each the first and the second secondary circuits of the double-exchanger (for CH, and HSW).

During the heating season the second secondary circuit of the heating double-exchanger is directly connected to the central heating system of the premises via two three-way valves. In the summer period the three-way valves are reconnected this second secondary circuit of the double-exchanger to the ejector for the cold production. The ejector is the double-circuit device, in which the hot water circuit from the double-exchanger provides for rapid evaporation of the cooling medium in the second circuit of the ejector, which medium is rapidly cooled by the rapid flow through the nozzle. Cold vapors of the cooling medium passes through the cold circuit of the double-exchanger of the ejector for cold water and cool the water in the radiator hot water distribution system or in the floor or ceiling or wall heating system of the premises. Thus the air conditioning of the premises is provided in the summer period. The control of the flow and temperature of the cooling water in the exchanger ejector is ensured by the control unit by the means of the tubular exchanger cold-water (via the circulation pump) with the frequency converter. Also here, the instruments measuring the temperature and the instruments measuring the flow of media are used for the measurement of the temperature and the flow, respectively.

Alternatively, the second secondary circuit of the double-exchanger can be connected to a series of thermocouples using three-way valves, which, using the Peltier-Seebeck phenomenon (thermoelectric or thermal phenomenon), provide cold production that can be used for the cooling of the premises in a similar way to the ejector. The produced cold water can be alternatively used also for the cooling of the photovoltaic panels. In this case the DC electric current from the batteries is used for the production of the cold in the thermocouples fixed on the back side of the photovoltaic panels.

Each secondary circuit of the double-exchanger is equipped with the safety (strangling) relief valves for the case of the excessive increase of the temperature above 90 °C.

The power device according to the present invention is preferably positioned in the thermally insulated container.

The second aspect of this invention discloses a method for the heat production, storage, and supply by the means of the power device according to the present invention, which method is based on the continuous balance equilibrium of the heat production and consumption at the temperature of 310 °C to 350 °C, and which comprises the following steps:

- continuous measurement of the temperature of the primary heat-bearing medium at the core inlet and outlet and simultaneously continuous measurement of the volumetric flow of the primary heat-bearing medium, which enable determination of the amount of transferred heat to the secondary heat-bearing medium, and in the same time,
- continuous measurement of the volumetric flow of the first and the second secondary heat-bearing media; continuous measurement of the temperature of the first secondary heat-bearing medium at the double-exchanger inlet and outlet; continuous measurement of the revolutions of the circulation element, and subsequently,
- calculation of the produced heat $\Delta Q_p$ in the primary hydraulic circuit, calculation of the taken heat (heat consumption) $\Delta Q_{s1}$ by the first secondary circuit, and calculation of the taken heat (heat consumption) $\Delta Q_{s2}$ by the second secondary circuit of the double-exchanger in accordance with the following formulas:

$$\Delta Q_p = q_{vp}*(T2_j-T1_j)* \rho_p * c_p \qquad (I.1)$$

$$\Delta Q_{s1} = q_{vs1}*(T2_{s1}-T1_{s1})* \rho_{s1} * c_{s1} \qquad (I.2)$$

$$\Delta Q_{s2} = q_{vs2}*(T2_{s2}-T1_{s2})* \rho_{s2} * c_{s2} \qquad (I.3)$$

wherein $q_{vp}$ is volumetric flow of the primary heat-bearing medium,

$q_{vs1}$ is volumetric flow of the first secondary heat-bearing medium,

$q_{vs2}$ is volumetric flow of the second secondary heat-bearing medium,

$T1_j$ is the temperature at the core inlet,

$T1_{s1}$ is the temperature at the inlet to the first secondary circuit of the double-exchanger,

$T1_{s2}$ is the temperature at the inlet to the second secondary circuit of the double-exchanger,

$T2_j$ is the temperature at the core outlet,

$T2_{s1}$ is the temperature at the outlet from the first secondary circuit of the double-exchanger,

$T2_{s2}$ is the temperature at the outlet from the second secondary circuit of the double-exchanger,

$\rho_p$ is the specific weight of the primary heat-bearing medium at the operation temperature,

$\rho_{s1}$ is the specific weight of the first secondary heat-bearing medium at the operation temperature,

$\rho_{s2}$ is the specific weight of the second secondary heat-bearing medium at the operation temperature,

$c_p$ is the specific heat capacity of the primary heat-bearing medium at the operation temperature,

$C_{s1}$ is the specific heat capacity of the first secondary heat-bearing medium at the operation temperature,

$C_{s2}$ is the specific heat capacity of the second secondary heat-bearing medium at the operation temperature, and

- the calculation of the heat extracted from the primary hydraulic circuit according to formula II:

$$\Delta Q_{p*} = \Delta Q_{s1} + \Delta Q_{s2} \qquad (II)$$

wherein

$\Delta Q_{s1}$ is the heat consumption of the first secondary circuit of the double-exchanger, $\Delta Q_{s2}$ is the heat consumption of the second secondary circuit of the double-exchanger,

- supplying of the taken heat $\Delta Q_{p*}$ to the system by the means of the control of the volumetric flow of the primary heat-bearing medium by the regulation of the revolutions of the scroll system drive, wherein the volumetric flow is calculated by the appropriate application of the formula (I.1)

$$q_{vp} = \Delta Q_{p*} /((T2_j - T1_j)* \rho_p * c_p).$$

According to the preferred embodiment the calculations of the produced and taken heat are performed periodically, preferably on an hourly basis. The calculations are carried out by the control unit.

Furthermore the power device according to the present invention can also comprise proportional instruments measuring heat for both secondary circuit (CH and HSW). Based on the data from the proportional instruments measuring produced and extracted heat, the correctness of the system settings is checked. The proportional heat measuring instruments are interconnected with the control unit comparing and assessing the measured and calculated values for the produced and extracted heat.

The advantage of the device according to this invention is that after adjusting the flow rates for the heat-bearing media by the means of the control unit, the device according to the present invention can operate fully autonomously.

As regards the environment, ecology, and emergency, the safety of the operation of the power device is ensured by using of the materials, which are not harmful, aggressive, or damaging to the environment, such as air, water or soil, neither from the short-term, nor the long-term durability view. The same safety applies to the complete recycling of the used materials.

The advantage of the device is high savings of input energy in production, storage, and supply of the heat and cold, long lifetime, at least 50 years, fast return of investments (mostly within 4-8 years), and particularly the safety of CH and HSW system in case of a power or heat source failure, with the continuing heat/cold supply for at least 12 - 16 hours, in the tempered regime for 24 hours or more.

The heat storage is ensured with minimal heat loss.

For the industrial facilities, which do not use waste heat or cold, the disclosed power device enables recovering the heat/cold energy uselessly leaving to the air, and thus obtain the proportional part of the energy by recovery with significantly reduced production costs in comparison with the present systems. And furthermore, the used resources are 100 % renewable. In case of the energy surplus or the fluctuating price of the energy from the electricity network or other source, the recuperation production of the electric energy by the means of Peltier (Seebeck) cells is triggered by its accumulation in the batteries enabling using of advantageous electricity prices anytime, when the control unit determines and enables it.

**Brief Description of Drawings**

Figure 1 schematically shows the power device according to the invention comprising the double-exchanger with the first and the second secondary circuit (HSW and CH).

Figure 2 schematically shows the power device according to the invention comprising three secondary circuits of the double-exchanger/triple-exchanger.

Figure 3a schematically shows the power device according to the invention with the safety circuit for the primary heat-bearing medium - by-pass of the double-exchanger.

Figure 3b schematically shows the power device according to the invention with the safety circuit for the primary heat-bearing medium - by-pass of the first and/or second secondary circuit of the double-exchanger.

Figure 4 shows the visualization of the device according to this invention according to the schema illustrated on Fig. 3b.

Figure 5 shows the scheme of the serial-parallel connection of the exchangers (double-exchanger).

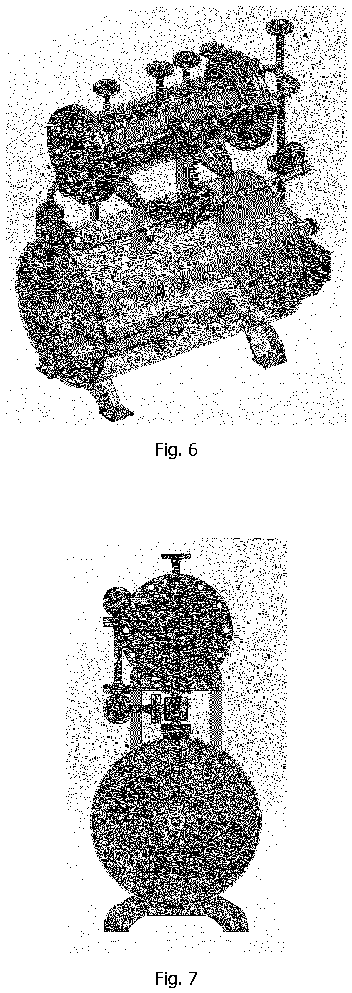

Figure 6 shows the view of the hydraulic system of the device according to the invention.

Figure 7 shows the side view of the power device.

**Examples of Embodiment**

Example 1

The power device according to the present invention, as illustrated on Figure 1, comprises the core 1 of cylindrical shape for annual consumption of 120 MWh, with the cylinder diameter of 900 mm, length of 1,200 mm, and height of 1,200 mm, which core is filled with the heat-absorption filling 7 having the approximate grit of 0.05 mm in the form of the mixture of 70 weight % of natural powdered talk and 30 weight % of flake graphite. The core is filled with the natural heat-absorption filling through the filling opening 8 equipped with the stopper. Two electric coils 17 are inserted to the core filling, which coils heat the core to the temperature of 350 °C. The electric coils 17 are powered by the battery storage 16 via electric cabling 20. The instrument 6 measuring the temperature is present in the core 1.

The core 1 is embedded in the thermal insulation 9 in the form of soft refractory materials in combination with aluminum foil. The thermal insulation 9 is covered by the core housing 2. Further the device comprises the primary hydraulic circuit 10 comprising the primary heat-bearing medium 4 in the form of thermal oil. The primary hydraulic circuit 10 passes through the core 1 along its longitudinal axis, where the thermal oil is heated and subsequently distributes the heat to the double-exchanger. The circulation element in the form of the scroll system 3 is positioned in the primary hydraulic circuit 10 in the center of the core 1. The revolutions of the scroll system 3 are controlled by the electric motor 24 via the frequency converter and thus the circulation of the thermal oil 4 in the primary hydraulic circuit 10 is ensured.

The control unit 25 sets and controls the flow of the thermal oil 4 by the means of the electric motor 24 with the frequency converter. The control unit 25 adjusts the temperature of the heat-absorption filling 7 by the means of the electric heating system and it controls said temperature by the means of the measuring system. The individual components of the power device, which are operated/controlled by the control unit 25, are interconnected with it by arrows (Fig. 1 to 3b).

The primary hydraulic circuit 10 comprises the inlet valve 23, through which the thermal oil 4 is filled, and it is hydraulically closed after inflation. In the primary hydraulic circuit 10 before the core 1 inlet, is positioned the insurance valve 11 to ensure safety of operation. The primary hydraulic circuit 10 transfers the heat to the double-exchanger 19, which double-exchanger comprises the first secondary circuit 22a for HSW and the second secondary circuit 22b for the central heating/ejector (CH/E). The first and the second secondary circuits 22a and 22b, comprise the circulation pumps 21 and the mixing valve with the cold water for the appropriate temperature of the hot service water, which circulation pumps control the water flow therein. The safety valves 12 are positioned at the double-exchanger 19 outlet in the first and the second secondary circuits 22a and 22b. Also the small water turbines 18 (SWT) can be preferably positioned in the first and the second secondary circuit 22a and 22b. The ejector 27 is double-circuit, wherein the first circuit is connected to the second secondary circuit 22a of the double exchanger 19 through the three-way valves 26. The ejector 27 is connected by the means of the second circuit to the exchanger 28 of the cooling system (air condition unit), which is also in the form of double-circuit and is connected by a second circuit to the second secondary circuit 22a of the double-exchanger 19. The second circuit of the exchanger 28 of the cooling system comprises the circulation pump 29 in the form of the tubular exchanger, the instrument 6 measuring the temperature, and the instrument 5 measuring the volumetric flow.

The measuring system (partially shown) further comprises the instruments 6 measuring the temperature of the primary heat-bearing medium, which are positioned in the primary hydraulic circuit 10 at the core 1 inlet and outlet, the instruments 6 measuring the temperature of the first secondary heat-bearing medium, which are positioned at the inlet and outlet of the first secondary circuit 22a of the double-exchanger 19, the instruments 6 measuring the temperature of the second secondary heat-bearing medium positioned at the inlet and outlet of the second secondary circuit 22b of the double-exchanger 19, the instrument 5 measuring the volumetric flow of the primary heat-bearing medium positioned in the primary hydraulic circuit 10, the instrument 5 measuring the volumetric flow of the first secondary heat-bearing medium, and the instrument 5 measuring the volumetric flow of the second secondary heat-bearing medium, and the instrument measuring the revolutions of the circulation element.

The battery storage 16 is primarily powered by the electricity network under the advantage tariffs, as well as from the alternative energy resources, such as the photovoltaic panels 15 and wind turbines. The electric heating system in the form of the electric coils is powered by the battery storage 16. The battery storage 16 is controlled by the automatic control unit 13 of the battery storage. The battery storage 16 is formed by the parallel connection of the defined number of batteries having the output from 4.8 kWh depending on the required thermal input of the given premises.

Example 2

The power device according to the invention, as illustrated on Figure 2, is the same as it was disclosed in Example 1, except that the double-exchanger 19 is supplemented with the third heat exchanger 19.1 having the independent secondary circulation system 22.1 for the ejector cooling. The primary hydraulic circuit 10 is equipped with three-way valves 26 on the third heat exchanger 19.1 inlet and outlet, as well as on the inlet and outlet of the exchanger for heating of the double-exchanger 19. Wherein the three-way valves are interconnected by parallel branches outside the exchangers, in order to enable seasonal shutdown of the individual exchangers - each one separately.

Example 3

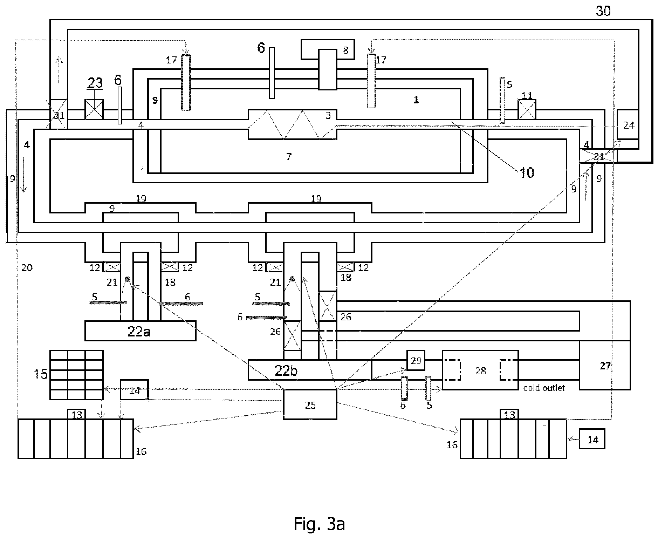

The power device according to the invention, as illustrated on Figure 3a, is the same as it was disclosed in Example 1, except that the primary hydraulic circuit 10 is equipped with the three-way valves 31 before and after entering the core 1, which are connected by the separate parallel branch 30 of the primary hydraulic circuit 10. This construction enables detachment of the double-exchanger 19 in case of its failure or maintenance or repair, and in the same time it serves as 100% safety guaranty by the forming of the by-pass.

Example 4

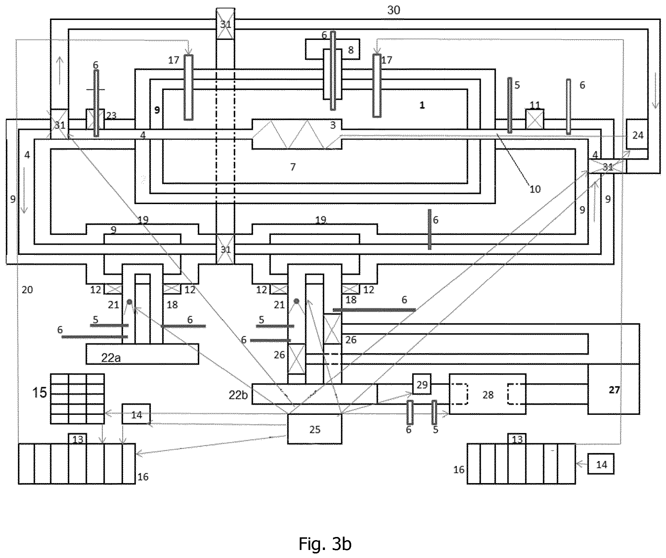

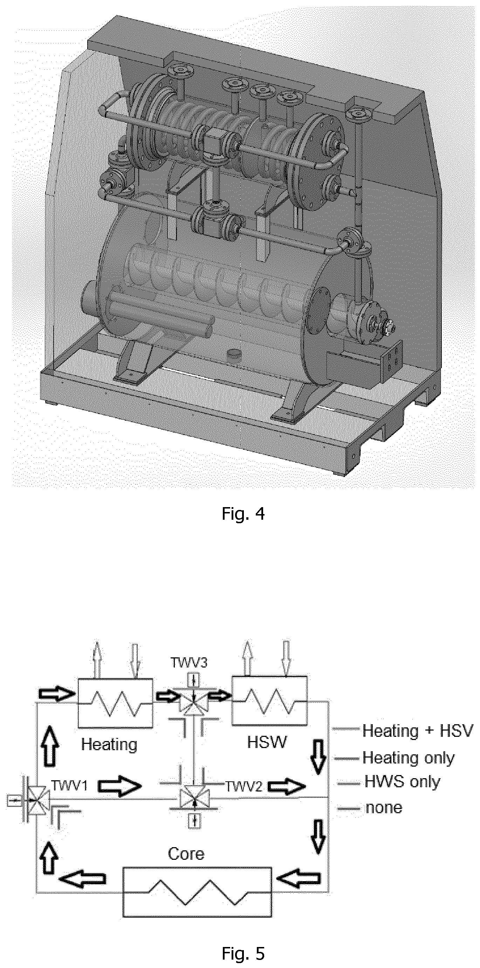

The power device according to the invention, as illustrated on Figure 3b and 4, is the same as described in Example 3a, except that the double-exchanger 19 is connected in series-in parallel at the primary hydraulic circuit 10. The block diagram of the connection is illustrated on Figure 5. This construction enables the detachment of each exchanger of the double-exchanger 19 independently (CH and HSW), or even the detachment of the whole double-exchanger 19 in case of its failure, maintenance or repair.

Example 5

The device illustrated on Figure 3a works as follows. In the primary hydraulic circuit 10 the thermal oil passes through the core 1, where it is permanently heated by the heat-absorption filling 7 to temperature of 350 °C, which temperature is kept by the heating bodies 17 of the electric heating system in the form of coils. The coils are powered by the battery storage 16. The thermal oil circulation is ensured by the pump in the form of the scroll driven by the electric motor 24. The heated thermal oil distributes the heat through the primary hydraulic circuit 10 via the double-exchanger 19 to the first and the second secondary circuits 22a and 22b for HSW and CH/E. Amount of heat for the preparation of HSW in the double-exchanger 19 is determined by the calculation program on the basis of the consumption data and the defined temperature of HSW, by the means of the setting of the calculated HSW flow and thermal oil 4 flow in the exchanger for HSW of the double-exchanger 19. While the exchanger for HSW works in year-round regime, the exchanger for CH/E works in two-stage regime, i.e. it has a heating period when it provides the CH for heating and a summer period. In the summer period this exchanger provides heat for the production of cold in the ejector 27 through the exchanger 28 of the cooling system. Chilled water is distributed to the radiator distribution system or to the floor or ceiling heating system, and thus providing the air condition function. The control of the hot water flows in the first and the second secondary circuits 22a and 22b of the double-exchanger 19 is performed by the electronic harmonization of the circulation pump 21 of the secondary circuits 22a and 22b, and the circulation pump (the scroll driven by the electric motor) of the primary hydraulic circuit 10 by the means of the control unit 25. The temperature of the individual media is measured by the instruments 6 measuring temperature at the inlet and outlet, and the flow is measured by the instruments 5 measuring the flows in both secondary circuits 22a and 22b. Safe operation in the double-exchanger 19 is ensured by the safety valves 12. In the heating period the CH exchanger is directly connected to the CH system of the building by the means of two three-way valves 26. In the summer period the three-way valves 26 interconnect the CH exchanger with the ejector 27 for the cold production. The ejector 27 is the double-circuit device, in which the circuit of the hot water from the exchanger for CH/E provides rapid evaporation of the cooling medium in the second circuit of the ejector 27, which medium is very quickly cooled by its rapid flowing through the nozzle. Cold vapors of the cooling medium pass through the cold circuit of the exchanger 28 of the cooling system and they cool the water in the hot water radiator distribution or in the floor or ceiling heating system of the building and ensure its air conditioning in the summer period. The control of the flow and temperature of the cooling water in the exchanger 28 of the cooling system is provided by the circulation pump 29 by the means of the frequency converter via the control unit 25, which control unit receives information from the individual instruments 5 measuring the flow and the instruments 6 measuring the temperature in the device. For the cases of failures in the secondary circuits 22a and 22b for HSW and CH/E, their system is protected against overheating with the thermal oil 4 by the means of two three-way/four-way valves 31 in such a way, that the flow of the thermal oil 4 by-passing the HSW and CH/E exchangers, i.e. the thermal oil 4 does not pass through them. Thus it is prevented the overheating of the secondary circuits 22a and 22b for HSW and CH over 90 °C also in the case of failure. At the same time, the temperature in the primary hydraulic circuit 10 will nor rise above 350 °C. The battery storage 16 is connected to the electricity network 14 and the control unit 25 ensures advantageous time periods for recharging of the battery storage 16 from the electricity network 14, on the basis of favourable spot power prices, or the night tariff.

The power source for the core heating is the electricity grid 14. It can be formed by the parallel connection of the defined number, e.g. 240, Ah batteries depending on the required power input of the particular premises. The battery storage 16, which is equipped with the automatic control unit 13 of the battery storage, can be alternatively supplied via the system of photovoltaic panels 15, wherein the connection to the electricity network is priority. The battery storage 16 can be powered also by the system of small water turbines 18, or wind turbines.

The system of draw-off from the electricity network 14 is controlled by the automatic control of the draw-off during the period of time determined for the supply of spot or night current for 20 hours a day. Supplying and regulation of the input currents and voltage to the heating bodies 17 lead to high temperatures up to 900 °C, which are, however, limited by the means of sensors and instruments measuring the heat up to 350 °C due to the permanent operation using the primary heat-transfer medium 4. The complete operation system is directed and controlled by the control unit 25, which on-line evaluates the temperatures status in various parts of the power device on the basis of the values from the measuring system and data from the circulation pumps 29. The control unit 25 evaluates and controls the required flowing amount of the heat passing through the circulation system of the premises, in order to keep the balanced "production - consumption" state, and controls the amount of the heat on hourly basis, or on another basis, e.g. minute-basis, and also on-line (continually) if necessary for the technology processes.

**Industrial Applicability**

The power device according to the present invention is usable in the field of all objects on the earth surface or under the earth surface, such as buildings, including industrial buildings, residential and municipal buildings, such as sport grounds, hospitals, rehabilitation facilities, everywhere, where the hot water is used for heating, or where the hot service water or hot water is used for technological purposes, with the possibility to use the cold water for cooling buildings and technologies. At the same time it is applicable in the field of using and storage of the waste heat or cold from the buildings or facilities.

List of the reference signs

1. Core
2. Core housing
3. Circulation element
4. Primary heat-bearing medium
5. Instruments measuring the volumetric flow in the power device
6. Instruments measuring the temperature in the power device
7. Heat-absorption filling
8. Filling opening
9. Thermal and reflexive insulation
10. Common primary hydraulic circuit
11. Safety valve of the primary heat-bearing medium
12. Safety valves in the secondary circuits of the double-exchanger
13. Control unit of the battery storage
14. Electricity network
15. Photovoltaic panels (PVP)

16. Battery storage

17. Heating bodies of the electric heating system

18. Small water turbines

19. Double-exchanger (HSW +CH/E)

19.1. Third heat exchanger for the ejector cooling

20. Electric cabling

21. Circulation pumps of the secondary circulation systems

22a. First secondary circuit of the double-exchanger for hot service water

22b. Second secondary circuit of the double-exchanger for heating/ejector

22.1. Secondary circuit of the third heat exchanger

23. Fill valve

24. Electric motor

25. Control unit

26. Three-way valves of the second secondary circuit of the double-exchanger

27. Ejector

28. Exchanger of the cooling system

29. Circulation pump of the cooling system

30. Parallel branch of the primary hydraulic circuit

31. Three-way valves of the primary hydraulic circuit

**Claims**

1. A power device for heat production, storage, and supply, **characterized in that** it comprises:

   - a core (1) for heat storage equipped with a heat and reflective insulation (9), wherein the core comprises a heat-absorption filling (7) in the form of the particles having the size of $\leq 0.1$ mm, and with thermal conductivity at the operation temperature in the range of 1.65 - 5.6 W/m.K, and with specific thermal capacity at the operating temperature in the range of 0.67 - 0.88 KJ/kg.K, where the operation temperature of the core (1) is from 310 °C to 350 °C,

   - an electric heating system adapted for the heating and maintaining of the heat-absorption filling (7) at the constant temperature in the range of 310 °C to 350 °C, comprising at least one heating body (17),

   - a common primary hydraulic circuit (10) of a double-heater (19) system in the form of the closed loop, passing through the core (1), wherein the primary hydraulic circuit (10) comprises a primary heat-bearing medium (4),

   - a first secondary circuit (22a) of the double-exchanger (19), wherein the first secondary circuit (22a) comprises a first secondary heat-bearing medium, and wherein the first secondary circuit (22a) is adapted for removing the heat from the primary hydraulic circuit (10),

   - a second secondary circuit (22b) of the double-exchanger (19), wherein the second secondary circuit (22b) comprises a second secondary heat-bearing medium, and wherein the second secondary circuit (22b) is adapted for removing the heat from the common primary hydraulic circuit (10),

   - a circulation element (3) in the form of scroll for providing of the flow of the primary heat-bearing medium (4), where the scroll is positioned in the primary hydraulic circuit (10) in the core (1),

   - an electric motor (24) with a frequency converter for driving and controlling of revolutions of the circulation element (3), for providing of the volumetric flow and the pressure of the primary heat-bearing medium (4),

   - a measuring system comprising at least one instrument (6) measuring the temperature in the core, at least one instrument (6) measuring the temperature of the primary heat-bearing medium at core outlet and at least one instrument (6) measuring the temperature of the primary heat-bearing medium at core inlet, at least one instrument (6) measuring the temperature of the first secondary heat-bearing medium at the double-exchanger inlet, at least one instrument (6) measuring the temperature of the first secondary heat-bearing medium at the double-exchanger outlet, at least one instrument (6) measuring the temperature the second secondary heat-bearing medium at the double-exchanger inlet, at least one instrument (6) measuring the temperature the second secondary heat-bearing medium at the double-exchanger outlet, at least one instrument (5) measuring the volumetric flow of the primary heat-bearing medium, at least one instrument (5) measuring the volumetric flow of the first secondary heat-bearing medium, at least one instrument (5) measuring the volumetric flow the second secondary heat-bearing medium and at least one instrument measuring of revolutions of the circulation element, and

   - a control unit (25) for control and regulation of the electric heating system, the primary hydraulic circuit (10), and the first and the second secondary circuits (22a, 22b) of the double-exchanger (19).

**2.** The power device according to claim 1, **characterized in that**, the electric heating system is adapted for the heating of the thermal-absorption filling (7) up to 350 °C.

**3.** The power device according to claim 1 or 2, **characterized in that**, the electric heating system is the electric resistance heating system, and preferably it comprises from two to eight heating bodies (17), wherein the heating bodies (17) are preferably the electric coils positioned in the airtight and leak-proof cases inserted in the core, wherein the electric coils are preferably wound up on the ceramic spikes.

**4.** The power device according to claims 1 or 2 or 3, **characterized in that** the source of the electric power for the electric heating system is the electricity network or a battery storage (16).

**5.** The power device according to claim 1, **characterized in that** the heat-absorption filling (7) is the powder natural material on the basis of basalt, magnesite, halite, talk, whinstone, flaky graphite, or their combination, preferably 70 weight % of powder talk and 30 weight % of flaky graphite.

**6.** The power device according to claim 1, **characterized in that** the electric motor (24) is DC or AC electric motor.

**7.** The power device according to claim 1, **characterized in that** the primary heat-bearing medium (4) is thermal oil, glycerin or liquid tin.

**8.** The power device according to claims 1 or 7, **characterized in that** the first and/or the second secondary heat-bearing medium is water or glycerin.

**9.** The power device according to any of the previous claims, **characterized in that** the control unit (25) is adopted for the economic optimization of the energy off-take by the selection of the source of the power for the heating system, and for the optimization of the lunching by the control unit (25) for utilization of the supplemental electric sources for recharging of the battery system.

**10.** The power device according to any of the previous claims, **characterized in that** the second secondary circuit (22b) of the double-exchanger (19) is adapted for the connection with the ejector (27) for the production of cold or for the central heating.

**11.** The power device according to any of claims 1 to 9, **characterized in that**, it contains a third heat exchanger (19.1) comprising a secondary circuit (22.1) for connecting to an ejector (27) for the production of cold.

**12.** The power device according to any of the preceding claims, **characterized in that** it is positioned in the thermally insulated container.

**13.** A method for the heat production, storage, and supply by the device according to claims 1 to 12, based on the continuous balance equilibrium of the heat production and heat consumption at the temperature of 310 °C to 350 °C, and **characterized in that** it comprises the following steps:

- continuous measurement of the temperature of the primary heat-bearing medium (4) at the core (1) inlet and outlet and simultaneously continuous measurement of the volumetric flow of the primary heat-bearing medium (4), and in the same time,
- continuous measurement of the volumetric flow of the first and the second secondary heat-bearing media, continuous measurement of the temperature of the first secondary heat-bearing medium at the double-exchanger inlet and outlet and continuous measurement of the temperature of the second secondary heat-bearing medium at the double-exchanger inlet and outlet, continuous measurement of the revolutions of the circulation element (3), and subsequently,
- the calculation of the produced heat in the primary hydraulic circuit (10) and the calculation of the consumed heat by the first secondary circuit (22a) and the second secondary circuit (22b) of the double-exchanger (19) according to formula I:

$$\Delta Q = q_v * (T2 - T1) * \rho * c \quad (I)$$

where $q_v$ is the volumetric flow of the corresponding (primary, the first secondary or the second secondary) heat-bearing medium,

T1 is the temperature at the inlet to the core (1)/first secondary circuit (22a)/the second secondary circuit (22b) of the double-exchanger (19),

T2 is the temperature at the outlet from the core (1)/first secondary circuit (22a)/the second secondary circuit (22b) of the double-exchanger (19),

$\rho$ is the specific weight of the corresponding (the primary, the first secondary or the second secondary) heat-bearing medium,

c is the specific thermal capacity of the corresponding (the primary, the first secondary or the second secondary) heat-bearing medium, and

- the calculation of the taken heat from the primary hydraulic circuit (10) according to formula II:

$$\Delta Q_p = \Delta Q_{s1} + \Delta Q_{s2} \qquad (II)$$

wherein

$\Delta Q_{s1}$ is the heat consumption of the first secondary circuit (22a) of the double-exchanger (19),

$\Delta Q_{s2}$ is the heat consumption of the second secondary circuit (22b) of the double-exchanger (19),

- supplying of the taken heat $\Delta Q_p$ to the system by the means of the control of the volumetric flow of the primary heat-bearing medium (4) by the regulation of the revolutions of the driver of the circulation element (3), wherein the volumetric flow is calculated by the appropriate application of the formula (I).

14. The method according to claim 13, **characterized in that** the calculations for the produced heat and taken heat are performed periodically, preferably on an hourly basis.

Fig. 1

Fig. 2

Fig. 3a

Fig. 3b

Fig. 4

Fig. 5

Fig. 6

Fig. 7

EPO FORM 1503 03.82 (P04C01)

**EUROPEAN SEARCH REPORT**

Application Number

EP 25 15 3872

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2018/238633 A1 (SEIDEL VOLKER [ES] ET AL) 23 August 2018 (2018-08-23) * the whole document * ----- | 1-14 | INV. F28D20/00 F24D18/00 |
| A | DE 10 2011 017311 A1 (KIELKOPF HARTMUT [DE]) 18 October 2012 (2012-10-18) * the whole document * ----- | 1-14 | |
| A | US 3 381 113 A (KEITH JACQUES JAMES ET AL) 30 April 1968 (1968-04-30) * the whole document * ----- | 1-14 | |
| A | US 2015/060006 A1 (WATREMETZ BENOÎT [FR] ET AL) 5 March 2015 (2015-03-05) * the whole document * ----- | 1-14 | |

TECHNICAL FIELDS SEARCHED (IPC)

F28D
F28F
F24H
F24D

The present search report has been drawn up for all claims

| Place of search | Date of completion of the search | Examiner |
|---|---|---|
| Munich | 17 June 2025 | Axters, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 25 15 3872

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2025

| Patent document cited in search report | Publication date | Patent family member(s) | | Publication date |
|---|---|---|---|---|
| US 2018238633 A1 | 23-08-2018 | CN | 108139168 A | 08-06-2018 |
| | | EP | 3308091 A1 | 18-04-2018 |
| | | US | 2018238633 A1 | 23-08-2018 |
| | | WO | 2017055409 A1 | 06-04-2017 |
| DE 102011017311 A1 | 18-10-2012 | NONE | | |
| US 3381113 A | 30-04-1968 | NONE | | |
| US 2015060006 A1 | 05-03-2015 | AU | 2012356141 A1 | 10-07-2014 |
| | | CN | 104136874 A | 05-11-2014 |
| | | EP | 2795228 A2 | 29-10-2014 |
| | | FR | 2985008 A1 | 28-06-2013 |
| | | JP | 2015506453 A | 02-03-2015 |
| | | US | 2015060006 A1 | 05-03-2015 |
| | | WO | 2013093820 A2 | 27-06-2013 |

EPO FORM P0459

For more details about this annex : see Official Journal of the European Patent Office, No. 12/82